# EUROPÄISCHE PATENTSCHRIFT

(11) **EP 0 952 936 B1**
(45) Veröffentlichungstag und Bekanntmachung des Hinweises auf die Patenterteilung: **24.09.2003**
(21) Anmeldenummer: 98907824.1
(22) Anmeldetag: 13.01.1998
(51) Int. Cl.: B60R 21/20

(54) **ANORDNUNG ZUR BEFESTIGUNG EINES GASGENERATORS**
ARRANGEMENT FOR FASTENING A GAS GENERATOR
DISPOSITIF POUR LA FIXATION D'UN GENERATEUR DE GAZ

(30) Priorität: 14.01.1997 DE 29701337 U
(43) Veröffentlichungstag der Anmeldung: 03.11.1999
(73) Patentinhaber: TAKATA - PETRI Aktiengesellschaft, 63743 Aschaffenburg (DE)
(72) Erfinder: THOMAS, Michael, D-63785 Obernburg (DE)
(74) Vertreter: Baumgärtel, Gunnar, Dr.
(86) Internationale Anmeldenummer: DE9800155
(87) Internationale Veröffentlichungsnummer: WO98031568

(56) Entgegenhaltungen:
- US-A- 5 257 815
- US-A- 5 458 363
- PATENT ABSTRACTS OF JAPAN vol. 097, no. 004, 30.April 1997 & JP 08 318803 A (NIPPON PLAST CO LTD), 3.Dezember 1996,

## Beschreibung

Die Erfindung betrifft eine Anordnung zur Befestigung eines Gasgenerators, insbesondere eines Rohrgasgenerators in einem Gehäuse, insbesondere in einem Diffusor eines Airbagmoduls nach dem Oberbegriff des Anspruchs 1.

Es ist bekannt einen Gasgenerator, insbesondere einen Rohrgasgenerator, innerhalb eines Gehäuses, insbesondere eines Diffusors anzuordnen, der eine Öffnung zum Einbringen des Gasgenerators aufweist. Der Diffusor umgibt den Gasgenerator allseitig und weist einen größeren Durchmesser als dieser auf (EP-A-0 631 908 A1).

Es ist weiterhin bekannt, den Gasgenerator an seinen Stirnflächen mit dem Diffusor zu verbinden. Wegen des größeren Durchmessers des Diffusors ist dieser an seiner Öffnung mit einem Adapter versehen, der die Durchmesserunterschiede des Diffusors und des Gasgenerators ausgleicht. Dieser liegt nach dem Einschieben in den Diffusor am Adapter an und wird an der gegenüberliegenden Seite mit dem Diffusor so verschraubt, daß er gegen den Adapter verspannt ist.

Es ist bekannt, daß als Adapter Stahlblechteile verwendet werden. Der Nachteil der Stahlblechteile besteht darin, daß sie teuer und schwer sind, und daß sie nur mittels einer Vorrichtung auf den Diffusor montiert werden können. Dadurch wird der Fertigungsablauf negativ beeinflußt und es werden zusätzliche Montagekosten verursacht.

Weiterhin ist aus der gattungsbildenden US-A-52 57 815 bekannt, einen als Orientierungsring bezeichneten Adapter aus Kunststoff, bevorzugt aus spritzgegossenem, hitzebeständigem thermoplastischem Material, zu fertigen. Nachteilig ist hierbei, daß Kunststoffe im allgemeinen zum Setzen neigen, wodurch die Dichtigkeit der Anordnung im Laufe der Zeit, insbesondere bei Hitzeeinwirkung, reduziert wird.

Der Erfindung liegt die Aufgabe zugrunde, die Montage eines Gasgenerators, insbesondere Rohrgasgenerators in einem Gehäuse, insbesondere in einem Diffusor unter Verwendung eines Kunststoffadapters so auszuführen, daß das Setzverhalten des Kunststoffes minimiert wird.

Erfindungsgemäß wird das gemäß den Merkmalen des Anspruchs 1 erreicht.

Bei einer Anordnung zur Befestigung eines Gasgenerators, insbesondere eines Rohrgasgenerators, in einem Gehäuse, insbesondere in einem Diffusor eines Airbagmoduls, wobei das Gehäuse ein offenes Ende für das Einführen des Gasgenerators aufweist und dieser unter Zwischenlage eines aus Kunststoff bestehenden Adapters an diesem Ende des Gehäuses anliegt und am gegenüberliegenden Ende mit dem Gehäuse verschraubt ist, ist das Gehäuse erfindungsgemäß derart ausgebildet, daß es sich aufgrund einer Verformung des Adapters beim Verschrauben des Gasgenerators mit dem Gehäuse an mindestens einer Stelle neben dem Adapter und/oder im Bereich eines Durchbruchs des Adapters in Wirkrichtung der Befestigungsschraube unmittelbar am Gasgenerator anlegt. Vorzugsweise weist das Gehäuse mindestens einen Steg auf, der durch den Adapter hindurch oder neben dem Adapter verläuft und an einer Stirnseite des Gasgenerators anliegt.

Diese Anordnung weist den Vorteil auf, daß der Gasgenerator beim Anschrauben an das Gehäuse unmittelbar mit diesem verspannt wird. Der Kunststoffadapter liegt zwischen dem Gehäuse und dem Gasgenerator und wird nur mit einer geringen Kraft axial belastet. Infolge dieser reduzierten Belastung wird ein Setzverhalten des Kunststoffadapters ausgeschlossen. Die Dichtwirkung bleibt über lange Zeit auch bei Wärmeeinwirkung erhalten. Ein weiterer Vorteil besteht darin, daß er preiswert herzustellen und leicht zu montieren ist.

Vorzugsweise liegt der Steg an einer Stirnfläche eines Generatorflansches an und es ist weiterhin zweckmäßig, daß zwei Stege vorgesehen sind.

Die Erfindung soll in einem Ausführungsbeispiel anhand von Zeichnungen erläutert werden. Es zeigen:

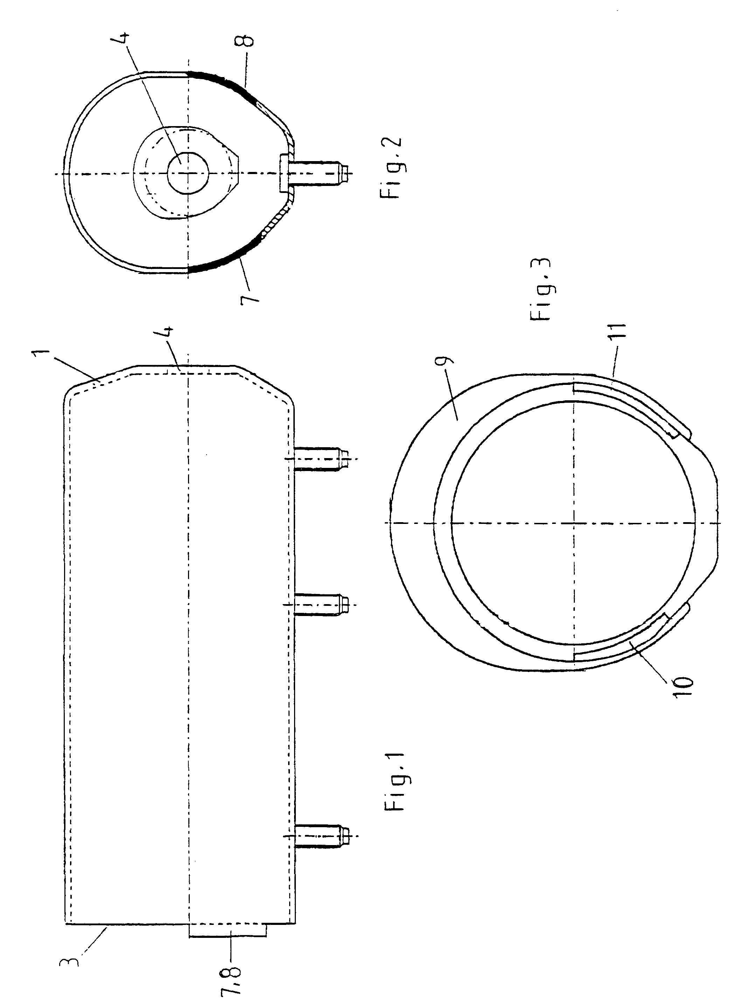

- Fig. 1: eine Seitenansicht eines Diffusors;
- Fig. 2: eine Vorderansicht des Diffusors;
- Fig. 3: eine Draufsicht auf einen Kunststoffadapter;
- Fig. 4: einen Längsschnitt durch einen Diffusor mit darin angeordnetem Gasgenerator.

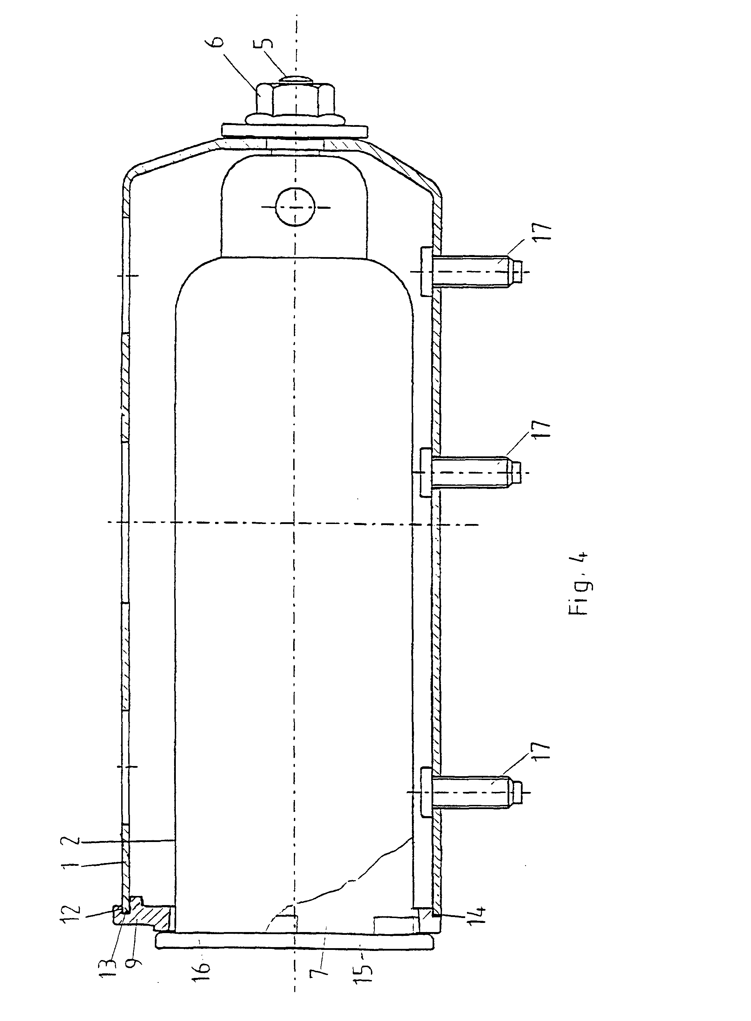

Ein Diffusor 1 für einen Rohrgasgenerator 2 (Fig. 4) weist ein offenes Ende 3 für das Einführen des Rohrgasgenerators 2 auf. Am anderen Ende des Diffusors ist ein Durchbruch 4 für einen Bolzen 5 des Rohrgasgenerators vorgesehen. Mittels des Bolzens 5 wird das eine Ende des Rohrgasgenerators mittels einer Mutter 6 mit dem Diffusor verbunden.

Am offenen Ende 3 des Diffusors 1 weist dieser zwei Stege 7, 8 auf. Weiterhin ist dort ein Kunststoffadapter 9 vorhanden, der mit zwei Durchbrüchen 10, 11 für die Aufnahme der Stege 7, 8 versehen ist. Der Adapter weist in der Draufsicht eine Außenkontur auf, deren Verlauf im wesentlichen der Außenkontur des Diffusors entspricht. Der Adapter weist im Bereich seiner Außenkontur eine Nut 12 für die Aufnahme der Stirnkante 13 des Diffusors auf. Diese Nut 12 verläuft nahezu über den gesamten Umfang, und läuft im unteren Bereich des Diffusors in einem Absatz 14 aus.

Der Adapter weist in der Draufsicht eine Innenkontur auf, die im wesentlichen dem Außendurchmesser des Rohrgasgenerators 2 entspricht. Dieser ist im Bereich des Adapters mit einem Flansch 15 versehen, der einen solchen Außendurchmesser hat, daß er mit einer Stirnfläche 16 am Adapter anliegen kann.

Die Montage des Rohrgasgenerators erfolgt nun derart, daß zunächst der Kunststoffadapter 9 auf den Diffusor 1 aufgesteckt wird, wobei sich die Stege 7, 8 in die Durchbrüche 10, 11 hinein erstrecken. Die Länge der Stege und die Dicke des Adapters sind so aufeinander abgestimmt, daß die Enden der Stege in dieser Phase der Montage noch um einen geringen Betrag, z.B. um wenige hundertstel Millimeter, innerhalb des Kunststoffadapters liegen. Anschließend wird der Rohrgasgenerator in den Diffusor eingeschoben wird, wobei der Bolzen 5 durch den Durchbruch 4 geführt wird. Durch Anziehen der Mutter 6 wird der Rohrgasgenerator mit dem Diffusor verbunden. Gleichzeitig legt sich die Stirnfläche 16 des Flansches 15 an den Kunststoffadapter an. Durch weiteres Anziehen wird dabei der Kunststoffadapter geringfügig verformt, so daß eine Dichtwirkung zwischen dem Kunststoffadapter und dem Diffusor bzw dem Flansch 15 eintritt. Infolge dieser geringen Verformung des Kunststoffadapters berühren die Stege 7, 8 nunmehr direkt die Stirnfläche 16 des Flansches 15. Dadurch wird beim weiteren Anziehen der Mutter 6 der Flansch 15 und damit der Rohrgasgenerator direkt gegenüber dem Diffusor 1 verspannt, während sich der Kunststoffadapter nicht weiter verformt.

Im Anschluß an die Montage des Rohrgasgenerators wird der Diffusor 1 mittels Bolzen 17 im Kraftfahrzeug befestigt.

## Patentansprüche

1. Anordnung zur Befestigung eines Gasgenerators (2), insbesondere eines Rohrgasgenerators, in einem Gehäuse (1), insbesondere in einem Diffusor eines Airbagmoduls, wobei das Gehäuse (1) ein offenes Ende (3) für das Einführen des Gasgenerators (2) aufweist und dieser unter Zwischenlage eines aus Kunststoff bestehenden Adapters (9) an diesem Ende des Gehäuses (1) anliegt und am gegenüberliegenden Ende mit dem Gehäuse (1) verschraubt ist,
**dadurch gekennzeichnet,**
**daß** das Gehäuse (1) derart ausgebildet ist, daß es sich aufgrund einer Verformung des Adapters (9) beim Verschrauben des Gasgenerators (2) mit dem Gehäuse (1) an mindestens einer Stelle neben dem Adapter (9) und/oder im Bereich eines Durchbruchs (10, 11) des Adapters (9) in Wirkrichtung der Befestigungsschraube (5) unmittelbar am Gasgenerator (2) anlegt.

2. Anordnung nach Anspruch 1, **dadurch gekennzeichnet, daß** das Gehäuse (1) mindestens einen Steg (7, 8) aufweist, der durch den Adapter (9) hindurch oder neben dem Adapter (9) verläuft und an einer Stirnseite des Gasgenerators (2) anliegt.

3. Anordnung nach Anspruch 1 oder 2, **dadurch gekennzeichnet, daß** der Steg (7, 8) an einer Stirnfläche (16) eines Generatorflansches (15) anliegt.

4. Anordnung nach mindestens einem der vorhergehenden Ansprüche, **dadurch gekennzeichnet, daß** zwei gegenüberliegende Stege (7, 8) vorgesehen sind.

## Claims

1. Arrangement for fixing a gas generator (2), more particularly a tubular gas generator, in a housing, more particularly in a diffuser of an airbag module wherein the housing (1) has an open end (3) for inserting the gas generator and the generator adjoins this end of the housing (1) with the interposition of an adapter (9) of plastics and is screwed at the opposite end to the housing (1),
**characterised in that**
the housing (1) is designed so that it directly adjoins the gas generator (2) as a result of deformation of the adapter (9) when screwing the gas generator (2) onto the housing (1) at at least one point next to the adapter (9) and/or in the area of an opening (10,11) of the adapter (9) in the active direction of the fastening screw (5).

2. Arrangement according to claim 1 **characterised in that** the housing (1) has at least one web (7,8) which runs through the adapter (9) or next to the adapter (9) and adjoins one end side of the gas generator (2).

3. Arrangement according to claim 1 or 2 **characterised in that** the web (7, 8) adjoins one end face (16) of a generator flange (15).

4. Arrangement according to at least one of the preceding claims **characterised in that** two opposing webs (7,8) are provided.

## Revendications

1. Dispositif pour la fixation d'un générateur de gaz (2), en particulier d'un générateur de gaz tubulaire, dans un logement (1), notamment dans un diffuseur d'un module de coussin d'air, dans lequel le logement (1) présente une extrémité ouverte (3) pour l'introduction du générateur de gaz (2) et celui-ci s'appuie sur cette extrémité du logement (1) avec l'intercalation d'un adaptateur (9) et se trouve vissé sur l'extrémité opposée avec le logement (1),
**caractérisé en ce que**,
le logement (1) est conçu de telle sorte que par suite d'une déformation de l'adaptateur (9) lors du vissage du générateur de gaz avec le logement (1), ce dernier vient s'appliquer sur au moins un endroit proche de l'adaptateur (9) et/ou au niveau d'une traversée (10,11) de l'adaptateur (9) dans la direction d'action de la vis de fixation (5) directement sur le générateur de gaz (2).

2. Dispositif selon la revendication 1,
**caractérisé en ce que** le logement (1) présente au moins une plaquette (7,8) qui traverse l'adaptateur (9) ou s'étend de façon adjacente à l'adaptateur (9) et s'appuie sur un côté frontal (16) du générateur (15).

3. Dispositif selon la revendication 1 ou 2,
**caractérisé en ce que** la plaquette (7,8) s'appuie sur un côté frontal (16) d'une bride de générateur (15).

4. Dispositif selon au moins l'une des revendications précédentes,
**caractérisé en ce qu'**il est prévu deux plaquettes (7,8) en regard l'une de l'autre.
